# EUROPEAN PATENT APPLICATION

(11) **EP 3 907 645 A1**
(43) Date of publication of application: **10.11.2021**
(21) Application number: 20173716.0
(22) Date of filing: 08.05.2020
(51) Int. Cl.: G06F 21/71, H04L 9/32, H04L 29/06, H04L 9/08, G06F 21/57

(54) **APPARATUS AND METHOD FOR CONTROLLING THE ASSEMBLY OF ELECTRONIC DEVICES**

(71) Applicant: Secure Thingz Limited, Trumpington, Cambridge CB2 9FF (GB)
(72) Inventor: SPITZ, Stephan, 85757 Karlsfeld (DE); POVEY, Haydn, Cambridge, CB2 9FF (GB)
(74) Representative: Patentship Patentanwaltsgesellschaft mbH

(57) **Abstract**

The invention relates to an apparatus (110) for controlling the integration of an electronic component (130) into an electronic device (120) for assembling the electronic device (120), wherein the electronic component (130) stores pre-provisioned data, including security sensitive data (131) and identification data (133) for identifying the security sensitive data (131), and wherein the assembled electronic device (120) is configured to perform a security sensitive operation on the basis of the security sensitive data (131). The apparatus (110) comprises a communication interface (113) configured to obtain the pre-provisioned data, including the security sensitive data (131) and the identification data (133), from the electronic component (130), and to obtain on the basis of the identification data (133) validation data (141) for validating the integrity of the electronic component (130) from one or more remote validation servers (140). The apparatus (110) further comprises a processor (111) configured to validate the integrity of the electronic component (130) on the basis of the security sensitive data (131) obtained from the electronic component (130) and on the basis of the validation data (141) obtained from the one or more remote validation servers (140). Moreover, a corresponding assembly control method is provided.

## Description

### TECHNICAL FIELD

The invention relates to the secure production of electronic devices. More specifically, the invention relates to an apparatus and method for controlling the integration of an electronic component, such as an electronic memory, into an electronic device for assembling the electronic device.

### BACKGROUND OF THE INVENTION

The production and assembly of state-of-the-art electronic devices, such as smartphones, tablet computers as well as other types of loT devices, often happens in a distributed fashion in that the various electronic components, including the electronic chips or microprocessors for an electronic device are manufactured, provisioned and/or personalized and finally assembled at different locations and by different parties. For instance, an electronic component, such as an electronic chip, microprocessor or memory, for an electronic device may be originally manufactured by a manufacturer and provisioned by another party with a suitable firmware, before being assembled into the final end product by the manufacturer of the electronic device.

Often electronic components, such as a secure memory, contain pre-provisioned security sensitive data, such as one or more electronic keys or other types of electronic secrets. Therefore, for the manufacturer of the electronic devices employing such electronic components it is important to be able to verify, i.e. validate the integrity of the pre-provisioned security sensitive data in a respective electronic component (which after its provisioning and prior to its integration into the electronic device might have been the target of a third party attack) to ensure a proper functioning of the assembled electronic device.

Thus, due to such distributed processing chains of electronic devices there is a need for apparatuses and methods allowing for a secure and controlled integration of electronic components, such as an electronic memory, into electronic devices for assembling the electronic devices.

### SUMMARY OF THE INVENTION

It is therefore an objective of the invention to provide apparatuses and methods allowing for a secure and controlled integration of electronic components, such as an electronic memory, into electronic devices for assembling the electronic devices.

The foregoing and other objectives are achieved by the subject matter of the independent claims. Further implementation forms end embodiments are apparent from the dependent claims, the description and the figures.

According to a first aspect an apparatus for controlling the integration of an electronic component into an electronic device for assembling the electronic device is provided. The electronic component stores pre-provisioned data, including security sensitive data and identification data for identifying the security sensitive data. The assembled electronic device is configured to perform a security sensitive operation on the basis of the security sensitive data. The electronic component may comprise chips, microprocessors or other programmable electronic components, such as Flash memories, electrically erasable programmable read only memories (EEPROM), programmable logic devices (PLDs), field programmable gate arrays (FPGAs), or microcontrollers incorporating non-volatile memory elements.

The assembly control apparatus comprises a communication interface configured to obtain the pre-provisioned data, including the security sensitive data and the identification data, from the electronic component, wherein the communication interface is further configured to obtain on the basis of the identification data validation data for validating the integrity of the electronic component from one or more remote validation servers. The assembly control apparatus further comprises a processor configured to validate the integrity of the electronic component on the basis of the security sensitive data obtained from the electronic component and on the basis of the validation data obtained from the one or more remote validation servers.

Thus, an assembly control apparatus is provided allowing for a secure and controlled integration of electronic components, such as an electronic memory, into electronic devices for assembling the electronic devices. Advantageously, the assembly control apparatus allows verifying, i.e. validating the integrity of the pre-provisioned security sensitive data in a respective electronic component (which after its provisioning and prior to its integration in the electronic device might have been the target of a third party attack) to ensure a proper functioning of the assembled electronic device.

In a further embodiment, the electronic device comprises a processor, wherein the processor of the apparatus is further configured to block the processor of the electronic device from using the security sensitive data to perform the security sensitive operation, in case the integrity of the electronic component has not been successfully validated by the processor. For instance, the processor of the apparatus might be configured to ease the security sensitive data or the replace the security sensitive data with different validated security sensitive data.

In a further embodiment, the processor of the apparatus is further configured to allow the processor of the electronic device to use the security sensitive data to perform the security sensitive operation, in case the integrity of the electronic component has been successfully validated by the processor.

In a further embodiment, the communication interface and/or the processor of the apparatus is further configured to perform a one-sided or mutual authentication operation with the one or more remote validation servers for obtaining on the basis of the identification data the validation data from the one or more remote validation servers.

In a further embodiment, the validation data comprises a first hash value identified by the identification data, wherein the processor of the apparatus is configured to generate a second hash value based on the security sensitive data obtained from the electronic component and wherein the processor of the apparatus is configured to validate the integrity of the electronic component on the basis of a comparison between the first hash value obtained from the one or more remote validation servers and the second hash value generated by the processor on the basis of the security sensitive data.

In a further embodiment, the security sensitive data comprises at least one electronic key and the identification data comprises at least one key identifier, i.e. a unique identifier for the electronic key.

In a further embodiment, the pre-provisioned data further comprises at least one date/time stamp identifying the date/time of the provisioning of the at least one electronic key on the electronic component and/or a serial number of the electronic component.

In a further embodiment, the processor of the apparatus is configured to generate the second hash value by computing a hash value of the at least one electronic key or a hash value of a concatenation of the at least one electronic key with the at least one key identifier, the at least one date/time stamp and/or the serial number of the electronic component.

In a further embodiment, the one or more remote validation servers operate a blockchain database, wherein the security sensitive data comprises a plurality of electronic keys, including at least a first electronic key and a second electronic key, and wherein the processor of the apparatus is configured to generate the second hash value as a chained hash value by computing an initial hash value based on the first electronic key and a further hash value based on the initial hash value and the second electronic key (and so on if the plurality of keys comprise more than two keys).

According to a second aspect the invention relates to a corresponding method for controlling the integration of an electronic component into an electronic device for assembling the electronic device. The electronic component stores pre-provisioned data, including security sensitive data and identification data for identifying the security sensitive data. The assembled electronic device is configured to perform a security sensitive operation on the basis of the security sensitive data. The method comprises the steps of:
obtaining the pre-provisioned data, including the security sensitive data and the identification data, from the electronic component;
obtaining on the basis of the identification data validation data for validating the integrity of the electronic component from one or more remote validation servers; and
validating the integrity of the electronic component on the basis of the security sensitive data obtained from the electronic component and on the basis of the validation data obtained from the one or more remote validation servers.

In a further embodiment, the electronic device comprises a processor, wherein the method comprises the further step of blocking the processor of the electronic device from using the security sensitive data to perform the security sensitive operation, in case the integrity of the electronic component has not been successfully validated.

In a further embodiment, the method comprises the further step of allowing the processor of the electronic device to use the security sensitive data to perform the security sensitive operation, in case the integrity of the electronic component has been successfully validated.

In a further embodiment, the method comprises the further step of performing a one-sided or mutual authentication operation with the one or more remote validation servers for obtaining on the basis of the identification data the validation data from the one or more remote validation servers.

In a further embodiment, the validation data comprises a first hash value identified by the identification data, wherein the method comprises the further step of generating a second hash value based on the security sensitive data obtained from the electronic component, wherein the step of validating the integrity of the electronic component comprises validating the integrity of the electronic component on the basis of a comparison between the first hash value obtained from the one or more remote validation servers and the second hash value generated by the processor of the apparatus on the basis of the security sensitive data.

The assembly control method according to the second aspect of the invention can be performed by the assembly control apparatus according to the first aspect of the invention. Thus, further features of the assembly control method according to the second aspect of the invention result directly from the functionality of the assembly control apparatus according to the first aspect of the invention and its different implementation forms described above and below.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating an assembly control system according to an embodiment of the invention, including an assembly control apparatus according to an embodiment of the invention;
Fig. 2 shows a schematic diagram illustrating pre-provisioned data stored on an exemplary electronic component to be integrated into an electronic device;
Fig. 3 shows a signaling diagram illustrating the interaction of the assembly control apparatus of figure 1 with the other components of the assembly control system of figure 1; and
Fig. 4 shows a flow diagram illustrating steps of an assembly control method according to an embodiment of the invention.

In the figures, identical reference signs will be used for identical or at least functionally equivalent features.

### DETAILED DESCRIPTION OF EMBODIMENTS

In the following detailed description, reference is made to the accompanying drawings, which form part of the disclosure, and in which are shown, by way of illustration, specific aspects in which the present invention may be implemented. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

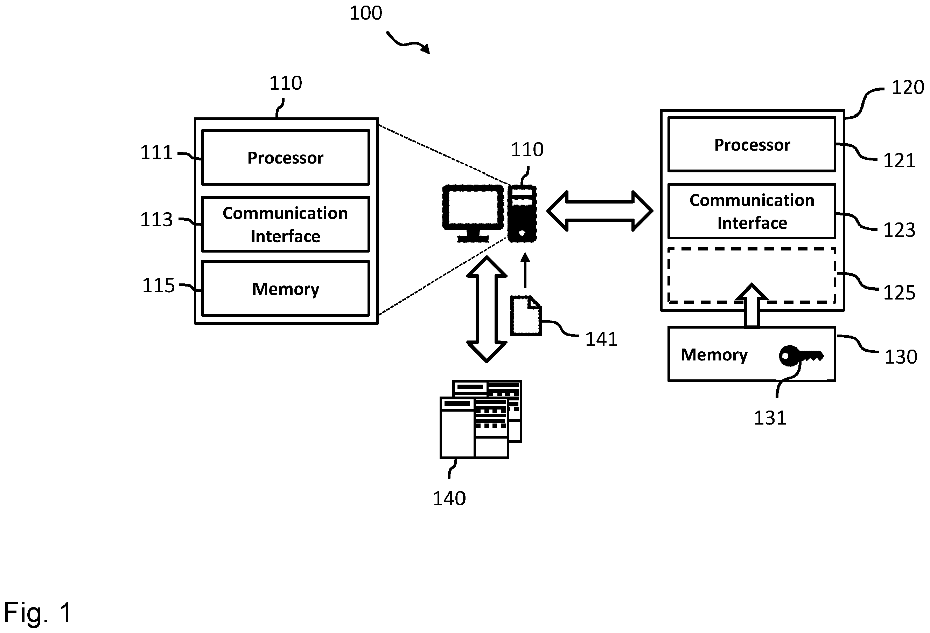

Figure 1 shows a schematic diagram of an assembly control system 100 according to an embodiment of the invention, including an assembly control apparatus 110 according to an embodiment of the invention. The assembly control apparatus 110, which may comprise a processor 111, a communication interface 113 and a memory 115 and may be implemented in the form of a PC, may be used as part of an assembly line for assembling electronic devices, such as the exemplary electronic device 120 shown in figure 1. As will be described in more detail further below, the assembly control apparatus 110 is configured to control the assembly of electronic devices, such as the exemplary electronic device 120 shown in figure 1. As illustrated in figure 1, the assembly of the electronic device 120 comprises the integration of an electronic component 130 into the electronic device 120. The electronic device 120 may be an electronic consumer device 120, such as a smartphone, tablet computer or another type of loT device, or itself a component of such an electronic device. As illustrated in the embodiment of figure 1, the electronic device 120 may comprise a processor 121, such as a CPU or MCU, for processing and handling data and a communication interface 123. The electronic component 130 may be, for instance, a memory 130 (as illustrated in figure 1), in particular a Flash memory, a microprocessor or a similar device configured to store and/or process data. As will be appreciated, the process of integrating the electronic component 130, such as Flash memory provided, for instance, in the form of a chip into the electronic device 120 for assembling the electronic device 120 may comprise several mechanical and/or electrical processing steps, such as arranging the electronic component 130 in a receiving slot 125 of the electronic device 120 and connecting the electronic component 130 to the other components of the electronic device 120, such as by means of a bus system of the electronic device 120. These types of processing steps are generally known and therefore will not be described in greater detail here.

As illustrated in figure 1, the electronic component, e.g. memory 130 stores pre-provisioned data, i.e. data that has been provided on the electronic component, e.g. memory 130 prior to the assembly of the electronic device 120, e.g. when the electronic component, e.g. memory 130 has been manufactured and/or provisioned, for instance, by the manufacturer of the electronic component, e.g. memory 130. The pre-provisioned data stored on the electronic component, e.g. memory 130 includes security sensitive data 131, in particular one or more electronic keys 131, as well as identification data 133 for identifying the security sensitive data 131, e.g. one or more key identifiers 133. As will be described in more detail below, based on the security sensitive data 131, in particular the one or more electronic keys 131 the assembled electronic device 120 is configured to perform a security sensitive operation, such as an authentication operation.

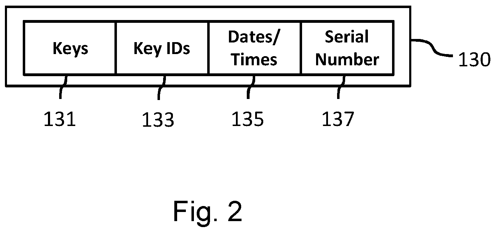

Figure 2 shows an example for the pre-provisioned data that may be stored on the electronic component, e.g. memory 130 in addition to the one or more electronic keys 131 and the corresponding one or more key identifiers 133, namely date and/or time stamps 135 indicating the date and/or time when the one or more keys 131 where provisioned on the electronic component, e.g. memory 130 and/or a serial hardware number 137 for identifying the electronic component, e.g. memory 130.

Once the electronic device 120 has been assembled, i.e. the electronic component 130 has been integrated therein, the communication interface 113 of the assembly control apparatus 110 is configured to access the electronic component 130 via the communication interface 123 of the electronic device 120. In an embodiment, the communication interface 113 of the assembly control apparatus 110 may be configured to communicate with the communication interface 123 of the electronic device 120 via a wired and/or wireless connection, such as a LAN or WLAN connection. Via the communication interface 123 of the electronic device 120 the assembly control apparatus 110 is configured to retrieve the pre-provisioned data stored on the electronic component, in particular the security sensitive data, e.g. the one or more keys 131 and the key identifier(s) 133.

As illustrated in figure 1, the assembly control apparatus 110 is further configured to communicate via its communication interface 113 with one or more remote validation servers 140. In an embodiment, the assembly control apparatus 110 and the one or more remote validation servers 140 may be configured to communicate with each other via a communication network, such as the Internet. Thus, the assembly control apparatus 110 and the one or more remote validation servers 140 may be at different locations and under the control of different parties. For instance, the one or more remote validation servers 140 may be operated by the manufacturer and/or provisioner of the electronic component 130 or a different trusted third party. In an embodiment, the assembly control apparatus 110 and the one or more remote validation servers 140 are configured to securely communicate with each other using one or more cryptographic schemes, such as a public key infrastructure and/or a hybrid cryptographic scheme.

On the basis of the identification data 133, e.g. key identifiers 133 obtained from the electronic component 130 the assembly control apparatus 110 is configured to retrieve via its communication interface 113 validation data 141 from the one or more remote validation servers 140, as illustrated in figure 1. In an embodiment, the assembly control apparatus 110 and the one or more remote validation servers 140 are configured to perform a mutual or one-sided authentication procedure before the validation data 141 is provided to the assembly control apparatus 110.

The validation data 141 obtained from the one or more remote validation servers 140 allows the assembly control apparatus 110 to validate the integrity of the security sensitive data 131 stored on the electronic component 130 and, thus, the integrity of the electronic component 130 itself. More specifically, the processor 111 of the assembly control apparatus 110 is configured to validate the integrity of the electronic component 130 on the basis of the security sensitive data 131 obtained from the electronic component 130 and on the basis of the validation data 141 obtained from the one or more remote validation servers 140.

If the validation of the electronic component 130 by the assembly control apparatus 110 is successful, the assembly control apparatus 110 is configured to allow the processor 121 of the assembled electronic device 120 to perform the security sensitive operation on the basis of the one or more keys 131. For instance, the security sensitive operation may be an authentication procedure based on the one or more keys 131 for accessing a further server, such as a server providing a new or updated firmware for the electronic device 120 or the electronic component integrated therein. Otherwise, i.e. if the validation of the electronic component 130 by the assembly control apparatus 110 based on the one or more keys 131 obtained from the electronic component 130 and the validation data 141 obtained from the one or more remote validation servers 140 is not successful, the assembly control apparatus 110 is configured to block the processor 121 of the assembled electronic device 120 to perform the security sensitive operation on the basis of the one or more keys 131. For instance, the processor 111 of the assembly control apparatus 110 may be configured to erase the one or more keys 131 or replace the one or more keys 131 by other trustworthy keys. Moreover, the assembly control apparatus 110 may indicate the unsuccessful validation of the electronic component 130 to a user by means of an audible or visible signal, for instance, on a display of the assembly control apparatus 110.

In an embodiment, the validation data 141 comprises one or more hash values 141 of the one or more keys 131 identified by the one or more key identifiers 133. In an embodiment, the one or more remote validation servers 140 operate a database storing for a plurality of key identifiers the respective hash value of the key identified by the respective key identifier. The database of the one or more remote validation servers 140 may further store for each key and key identifier pair the date and/or time when the respective key was provisioned on the electronic component 130 as well as the serial number of the electronic component 130. On the basis of the key identifier 133 provided by the assembly control apparatus 100 the one or more remote validation servers 140 are configured to retrieve the hash value 141 of the key 131 corresponding to the key identifier 133 from the database and provide the retrieved hash value 141 to the assembly control apparatus 110. In an embodiment, the hash value 141 may be a hash value 141 not only of the one or more keys 131 but also of one or more of the data elements of the other pre-provisioned data of the electronic component, i.e. the one or more key identifiers 133, the one or more date and/or time stamps 135 and/or the serial number 137 of the electronic component 130.

For validating the integrity of the one or more keys 131 (and in an embodiment of the other pre-provisioned data) the processor 111 of the assembly control apparatus 110 is configured to compute the hash value of the key 131 retrieved from the electronic component 130 and to compare this computed hash value with the hash value obtained from the one or more remote validation servers 140. As will be appreciated, for doing so the assembly control apparatus 110 has knowledge about the hash function as well as the arguments of the hash function used for computing the hash values stored in the database operated by the one or more remote validation servers 140. In an embodiment, the processor 111 of the assembly control apparatus 110 may be configured to compute the hash value of the key 131 using any one of known hash functions, such as SHA-512.

In an embodiment, the one or more remote validation servers 140 may operate a distributed blockchain database, wherein the security sensitive data 131 comprises a plurality of electronic keys 131, including a first electronic key 131 and a second electronic key 131. In this case the processor 111 of the assembly control apparatus 110 may be configured to compute the hash value as a chained hash value, i.e. by computing an initial hash value based on the first electronic key 131 and a further hash value based on the initial hash value and the second electronic key 131 and so on. This allows the assembly control apparatus 110 to validate the history of key provisioning on the electronic component 130.

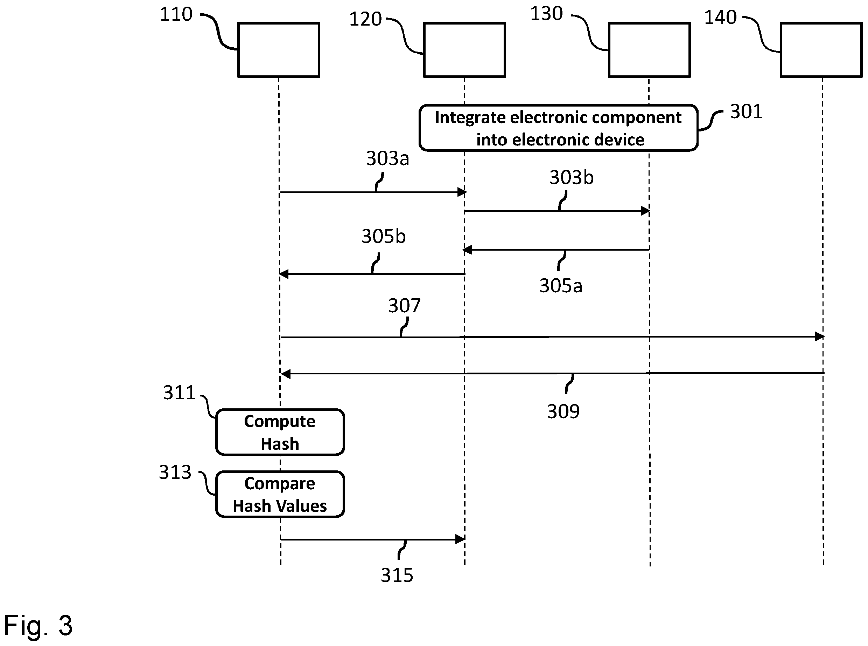

Figure 3 shows a signaling diagram illustrating the interaction of the assembly control apparatus 110 with the other components of the assembly control system 100, i.e. the one or more remote validation servers 140 as well as the electronic device 120 and the electronic component 130 thereof. In figure 3 the following steps are illustrated, some of which already have been described in the context of figures 1 and 2 above.

In step 301 of figure 3, the electronic component 130, e.g. the memory 130; is physically (i.e. mechanically and/or electrically) integrated into the electronic device 120 for assembling, i.e. completing the electronic device 120.

In steps 303a and 303b of figure 3 the assembly control apparatus 110 requests access to the pre-provisioned data stored on the electronic component 130, e.g. the Flash memory 130. To this end, the communication interface 113 of the assembly control apparatus 110 communicates with the communication interface 123 of the electronic device 120, which, in turn, for instance via a bus system of the electronic device 120 communicates with the electronic component, e.g. memory 130.

In response to the request of steps 303a and 303b of figure 3 the electronic component, e.g. memory 130 provides its pre-provisioned data, including the one or more keys 131 and the one or more key identifiers 133, to the assembly control apparatus 110 (steps 305a, 305b of figure 3).

In step 307 of figure 3 the assembly control apparatus 110 requests on the basis of the one or more key identifiers 133 obtained from the electronic component, e.g. memory 130 the validation data 141 from the one or more remote validation servers 140. This step may comprise a one-sided or mutual authentication between the assembly control apparatus 110 and the one or more remote validation servers 140.

In response to the request of step 307 of figure 3 the one or more validation servers 140 identify on the basis of the one or more key identifiers 133 the validation data 141 in the form of one or more corresponding hash values 141 and provide the one or more corresponding hash values 141 to the assembly control apparatus 110. For security reasons the corresponding keys themselves should not be stored in the database operated by the one or more remote validation servers 140, but only their hash values together with the respective identifiers. As already described above, the one or more hash values 141 may be a hash value of the key 131 only or a hash value of a concatenation of the key 131 with the other pre-provisioned data, i.e. the key identifier 133, the date/time stamp 135 and/or the serial number 137 of the electronic component 130.

In step 311 of figure 3 the processor 111 of the assembly control apparatus 100 computes the hash value of the key 131 (possibly concatenated with the other pre-provisioned data) obtained from the electronic component 130 in steps 305a and 305b of figure 3. As will be appreciated, step 311 of figure 3 may be performed prior to or at least partially in parallel with steps 307 and 309 of figure 3.

Once the assembly control apparatus 110 has received via its communication interface 113 the validation data in the form of the one or more hash values 141 from the one or more remote validation servers 140 (step 309 of figure 3) and computed the hash value of the key 131 obtained from the electronic component 130 (step 311 of figure 3), the processor 111 of the assembly control apparatus 110 compares the hash value 141 obtained from the one or more remote validation servers 140 with the hash value computed on the basis of the key 131 obtained from the electronic component 130 (step 313 of figure 3).

Depending on whether the two hash values match or do not match, the assembly control apparatus 110 may allow or block in step 315 of figure 3 the processor 121 of the electronic device 120 to use the one or more keys 131 for performing security sensitive operations.

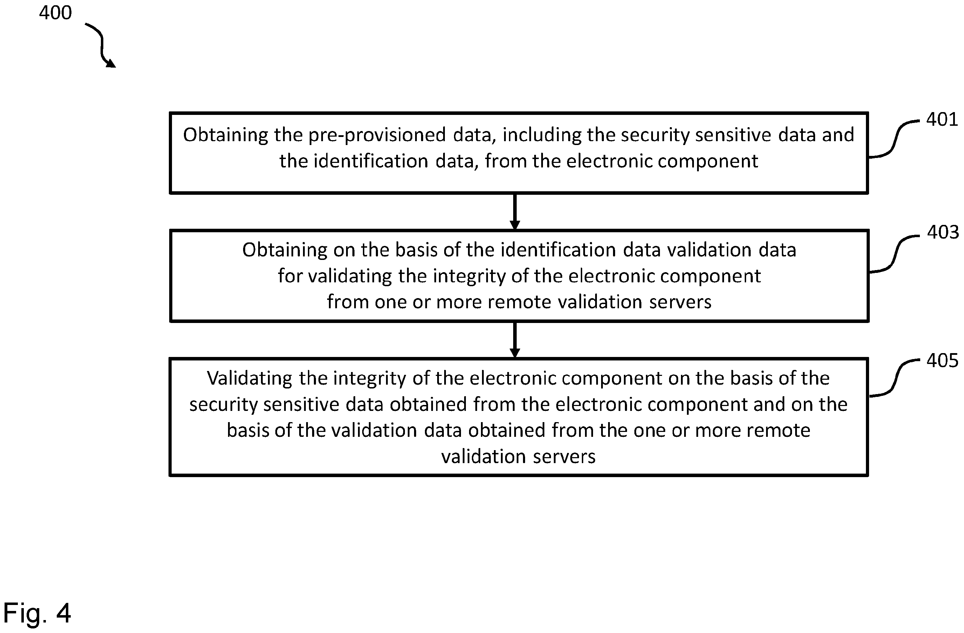

Figure 4 shows a flow diagram illustrating steps of a corresponding method 400 for controlling the integration of the electronic component 130 into the electronic device 120 for assembling the electronic device 120. The method 400 comprises the steps of:
obtaining 401 the pre-provisioned data, including the security sensitive data 131 and the identification data 133, from the electronic component 130;
obtaining 403 on the basis of the identification data 133 the validation data 141 for validating the integrity of the electronic component 130 from the one or more remote validation servers 140; and
validating 405 the integrity of the electronic component 130 on the basis of the security sensitive data 131 obtained from the electronic component 130 and on the basis of the validation data 141 obtained from the one or more remote validation servers 140.

As will be appreciated, embodiments of the invention provide a higher flexibility with respect to the secure production and personalization of electronic devices and equipment. Moreover, embodiments of the invention allow delegating secure production of electronic devices and components for electronic equipment. Moreover, embodiments of the invention allow load balancing and on-demand production/personalization of security critical systems.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application.

Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. An apparatus (110) for controlling the integration of an electronic component (130) into an electronic device (120) for assembling the electronic device (120), wherein the electronic component (130) stores pre-provisioned data, including security sensitive data (131) and identification data (133) for identifying the security sensitive data (131), and wherein the assembled electronic device (120) is configured to perform a security sensitive operation on the basis of the security sensitive data (131), wherein the apparatus (110) comprises:
a communication interface (113) configured to obtain the pre-provisioned data, including the security sensitive data (131) and the identification data (133), from the electronic component (130), wherein the communication interface (113) is further configured to obtain on the basis of the identification data (133) validation data (141) for validating the integrity of the electronic component (130) from one or more remote validation servers (140);
a processor (111) configured to validate the integrity of the electronic component (130) on the basis of the security sensitive data (131) obtained from the electronic component (130) and on the basis of the validation data (141) obtained from the one or more remote validation servers (140).

2. The apparatus (110) of claim 1, wherein the electronic device (120) comprises a processor (121) and wherein the processor (111) of the apparatus (110) is further configured to block the processor (121) of the electronic device (120) from using the security sensitive data (131) to perform the security sensitive operation, in case the integrity of the electronic component (130) has not been successfully validated by the processor (111).

3. The apparatus (110) of claim 1 or 2, wherein the electronic device (120) comprises a processor (121) and wherein the processor (111) of the apparatus (110) is further configured to allow the processor (121) of the electronic device (120) to use the security sensitive data (131) to perform the security sensitive operation, in case the integrity of the electronic component (130) has been successfully validated by the processor (111).

4. The apparatus (110) of any one of the preceding claims, wherein the communication interface (113) of the apparatus (110) is configured to perform a one-sided or mutual authentication operation with the one or more remote validation servers (140) for obtaining on the basis of the identification data (133) the validation data (141) from the one or more remote validation servers (140).

5. The apparatus (110) of any one of the preceding claims, wherein the validation data (141) comprises a first hash value (141) identified by the identification data (133) and wherein the processor (111) of the apparatus (110) is configured to generate a second hash value based on the security sensitive data (131) obtained from the electronic component (130), wherein the processor (111) of the apparatus (110) is configured to validate the integrity of the electronic component (130) on the basis of a comparison between the first hash value (141) obtained from the one or more remote validation servers (140) and the second hash value based on the security sensitive data (131).

6. The apparatus (110) of claim 5, wherein the security sensitive data (131) comprises at least one electronic key (131) and the identification data (133) comprises at least one key identifier (133).

7. The apparatus (110) of claim 6, wherein the pre-provisioned data further comprises at least one date/time stamp (135) identifying the date/time of the provisioning of the at least one electronic key (131) and/or a serial number (137) of the electronic component (130).

8. The apparatus (110) of claim 7, wherein the processor (111) of the apparatus (110) is configured to generate the second hash value by computing a hash value of the at least one electronic key (131) or a hash value of a concatenation of the at least one electronic key (131) with the at least one key identifier (133), the at least one date/time stamp (135) and/or the serial number (137) of the electronic component (130).

9. The apparatus (110) of any one of any one of claims 5 to 8, wherein the one or more remote validation servers (140) operate a blockchain database and wherein the security sensitive data (131) comprises a plurality of electronic keys (131), including a first electronic key (131) and a second electronic key (131), wherein the processor (111) of the apparatus (110) is configured to generate the second hash value by computing an initial hash value based on the first electronic key (131) and a further hash value based on the initial hash value and the second electronic key (131).

10. The apparatus (110) of any one of the preceding claims, wherein the electronic component (130) is an electronic memory (130), in particular a Flash memory (130).

11. A method (400) for controlling the integration of an electronic component (130) into an electronic device (120) for assembling the electronic device (120), wherein the electronic component (130) stores pre-provisioned data, including security sensitive data (131) and identification data (133) for identifying the security sensitive data (131), and wherein the assembled electronic device (120) is configured to perform a security sensitive operation on the basis of the security sensitive data (131), wherein the method (400) comprises:
obtaining (401) the pre-provisioned data, including the security sensitive data (131) and the identification data (133), from the electronic component (130);
obtaining (403) on the basis of the identification data (133) validation data (141) for validating the integrity of the electronic component (130) from one or more remote validation servers (140); and
validating (405) the integrity of the electronic component (130) on the basis of the security sensitive data (131) obtained from the electronic component (130) and on the basis of the validation data (141) obtained from the one or more remote validation servers (140).

12. The method (400) of claim 11, wherein the electronic device (120) comprises a processor (121) and wherein the method (400) comprises the further step of blocking the processor (121) of the electronic device (120) from using the security sensitive data (131) to perform the security sensitive operation, in case the integrity of the electronic component (130) has not been successfully validated.

13. The method (400) of claim 11, wherein the electronic device (120) comprises a processor (121) and wherein the method (400) comprises the further step of allowing the processor (121) of the electronic device (120) to use the security sensitive data (131) to perform the security sensitive operation, in case the integrity of the electronic component (130) has been successfully validated.

14. The method (400) of any one of claims 11 to 13, wherein the method (400) comprises the further step of performing a one-sided or mutual authentication operation with the one or more remote validation servers (140) for obtaining on the basis of the identification data (133) the validation data (141) from the one or more remote validation servers (140).

15. The method (400) of any one of claims 11 to 14, wherein the validation data (141) comprises a first hash value (141) identified by the identification data (133) and wherein the method (400) comprises the further step of generating a second hash value based on the security sensitive data (131) obtained from the electronic component (130), wherein the step of validating the integrity of the electronic component (130) comprises validating the integrity of the electronic component (130) on the basis of a comparison between the first hash value (141) obtained from the one or more remote validation servers (140) and the second hash value based on the security sensitive data (131).
